# EUROPÄISCHE PATENTANMELDUNG

(11) **EP 1 180 422 A1**
(43) Veröffentlichungstag der Anmeldung: **20.02.2002**
(21) Anmeldenummer: 01110662.2
(22) Anmeldetag: 02.05.2001
(51) Int. Cl.: B29C 39/24, B29C 39/42, B01F 13/06, B29C 31/04

(54) **Vorrichtung zur Herstellung von Giessformen unter Vakuum**

(30) Priorität: 02.06.2000 DE 10027589
(71) Anmelder: Röth, Uwe Dr., 42489 Wülfrath (DE); Pieper-Röth, Gabriele, 42489 Wülfrath (DE)
(72) Erfinder: Röth, Uwe, Dr., 42489 Wülfrath (DE)
(74) Vertreter: Götz, Friedrich, Dipl.-Phys.

(57) **Zusammenfassung**

Gegenstand der Erfindung ist eine Vorrichtung zur Herstellung von Gießformen. Üblich ist es, einen Anrührbecher mit Deckel und Mischpropeller an einen Rührmotor und eine Vakuumpumpe anzuschließen, um die Eingießmasse gründlich zu verrühren und dabei zu entlüften.

Um Luftblasen und andere Fehler an der Gießform sicher zu vermeiden, zeigt die Erfindung einen Weg, mit einfachen Mitteln das Eingießen selbst unter Vakuum vorzunehmen.

Dies gelingt dadurch, dass die Bodenplatte (6b) des Anrührbechers (6) ein Ausströmventil (6c, 8) aufweist, dass diese Bodenplatte zugleich Deckel eines Eingießbehälters (7) ist und dass ein Absperrhahn (13) vorgesehen ist, mit dem nach Beendigung des Mischens der Eingießbehälter (7) entlüftet wird. Durch den Druckausgleich öffnet sich das Ausströmventil (6c, 8) und die Eingießmasse umfließt unter Vakuum das Modell.

## Beschreibung

### Technisches Gebiet

Die Erfindung betrifft eine Vorrichtung zur Herstellung von Gießformen unter Vakuumbedingungen mit einem topfartigen Anrührbecher, dessen Deckel einen Lagerflansch und eine Welle mit einem Mischpropeller trägt. Die Welle ist an einen Rührmotor ankuppelbar. Der Lagerflansch weist eine Bohrung auf, an die eine Vakuumpumpe anschließbar ist.

### Stand der Technik

In der Dentaltechnik oder bei der Schmuckherstellung ist es üblich, für geplante Werkstücke ein genaues Modell aus Wachs aufzubauen, dieses dann in eine gegossene Formmasse einzubetten und diese Form nach Aushärtung der Masse und nach dem Ausschmelzen des Wachses auszugießen.

Um eine Formmasse blasenfrei herstellen zu können, wurden sogenannte Vakuum-Anrührgeräte entwickelt, die folgenden Aufbau haben:

Ein druckfester, zylindrischer oder kegelstumpfartiger Mischbecher wird mit einem Deckel verschlossen, in dem eine Welle mit Mischpropeller gelagert ist. Das Kupplungsstück am oberen Ende der Welle wird in eine Antriebseinheit gesteckt, die einen Rührmotor und eine Vakuumpumpe aufweist. Eine achsparallele Bohrung in dem Lagerschild der Welle wird mit der Vakuumpumpe verbunden. Zwischen Mischbecher und Deckelrand ist eine O-Ring-Dichtung vorgesehen. Ein derartiges Vakuummischgerät für Dentalmaterialien wird in der DE 197 48 511 A1 offenbart.

Man schüttet Wasser und Formmasse in den Mischbecher, setzt den Deckel mit dem Rührpropeller auf und schiebt die Welle von unten in die Kupplungsbuchse. Bei anlaufender Vakuumpumpe wird der Becher sofort angesaugt und die Formmasse unter optimaler Entlüftung gemischt. Nach Ablauf der einstellbaren Zeit lässt man die Luft in den Mischbecher eindringen, nimmt ihn ab und gießt die zähflüssige Masse in ein weiteres Gefäß mit dem Wachsmodell.

Um das Einhüllen des Musters zu verbessern, ist es üblich, das Gefäß mit der Vergussmasse auf einen Rüttler zu stellen.

Es wird auch vorgeschlagen, das Gefäß bis zur Aushärtung der Masse einem Luftdruck von mehreren bar auszusetzen. Damit kann man eventuelle Luftblasen zwar verkleinern, jedoch nicht beseitigen.

Trotz dieser Maßnahmen kann es vorkommen, dass bei komplizierten Modellen nicht alle feinen Konturen oder Hinterschneidungen exakt abgebildet werden, sondern Luftblasen zwischen Modell und Gießmasse stehen bleiben.

Fehler dieser Art sind erst dann feststellbar, wenn die Gussform ausgehärtet, getrocknet, ausgeheizt und ausgegossen ist;. sie verursachen also eine erhebliche Nacharbeit.

### Darstellung der Erfindung

Der Erfindung liegt die Aufgabe zugrunde, mit einfachsten Mitteln das Eingießen des Modells selbst unter Vakuum durchzuführen.

Dies gelingt erfindungsgemäß dadurch, dass der Boden des Anrührbechers ein Ausströmventil aufweist, dass dieser Boden zugleich als Deckel für einen topfförmigen Eingießbehälter ausgebildet ist und dass an diesen Deckel ein Absperrhahn angeschlossen ist, dessen oberes Anschlussröhrchen in den materialfreien Teil des Anrührbehälters mündet.

Bei einem bevorzugten Ausführungsbeispiel der Erfindung weist das Ausströmventil als abdichtendes Element eine Elastomerkugel auf, die federnd unterhalb der Ausströmöffnung aufgehängt ist und durch eine schwenkbare Blattfeder gegen die Öffnung gepresst werden kann. Diese Blattfeder wird dann zur Seite geschwenkt, wenn die Kugel infolge des sich aufbauenden Vakuums gegen die Öffnung gepresst wird.

### Beschreibung der Zeichnungen

Ein Ausführungsbeispiel der Erfindung wird anhand von Fig. 1 - 3 der Zeichnung erläutert.
- **Fig. 1**: stellt einen Längsschnitt durch die Anordnung in auseinandergezogener Form dar,
- **Fig. 2**: zeigt den Deckel mit dem Mischpropeller von unten,
- **Fig. 3**: den Deckel des Eingießbehälters von unten mit dem Überströmventil.

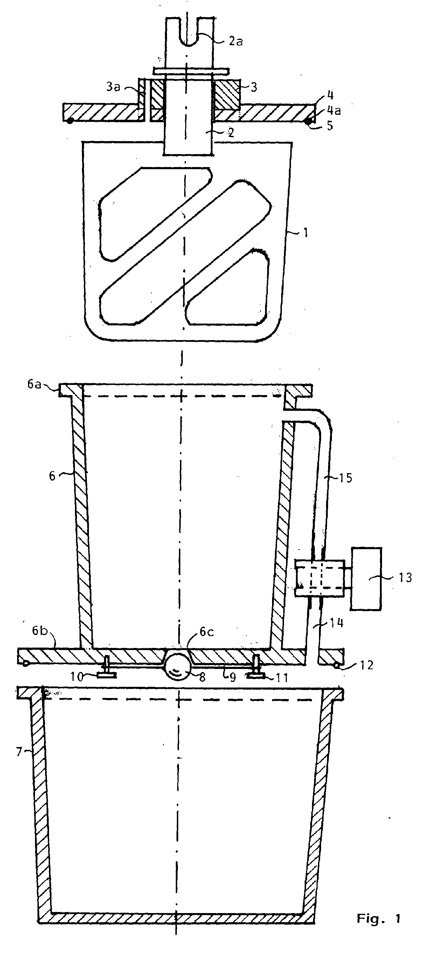

Im oberen Teil von Fig. 1 ist ein Mischpropeller 1 dargestellt, der auf einer kurzen Welle 2 befestigt ist. Das obere Ende der Welle weist eine Kupplungsnut 2a auf. Ein Lagerflansch 3 ist mit einem kreisrunden Deckel 4 fest verbunden. In den Deckel 4 ist eine umlaufende Nut 4a eingeformt, in der eine O-Ring-Dichtung 5 liegt. Eine achsparallele Bohrung 3a wird mit einer Vakuumpumpe verbunden und ermöglicht die Entlüftung des Anrührbechers.

Im mittleren Teil der Fig. 1 ist ein leicht konischer Anrührbecher 6 dargestellt, der am oberen Rand in einen breiteren Dichtungsflansch 6a übergeht. Die Bodenplatte 6b ist zugleich Deckel für einen Eingießbehälter 7. Diese Platte weist im Zentrum eine konische Bohrung 6c auf, unter der eine Elastomerkugel 8 federnd aufgehängt ist. Im einfachsten Fall dient zur Aufhängung ein Gummiband 9, das an Schrauben 10 und 11 befestigt ist.
In den unteren Rand der Platte 6b ist ein O-Ring 12 eingesetzt.
Ein Absperrhahn 13 ist über ein Röhrchen 14 mit der Unterseite der Platte 6b und über ein Röhrchen 15 mit dem oberen Teil des Anrührbechers 6 verbunden.

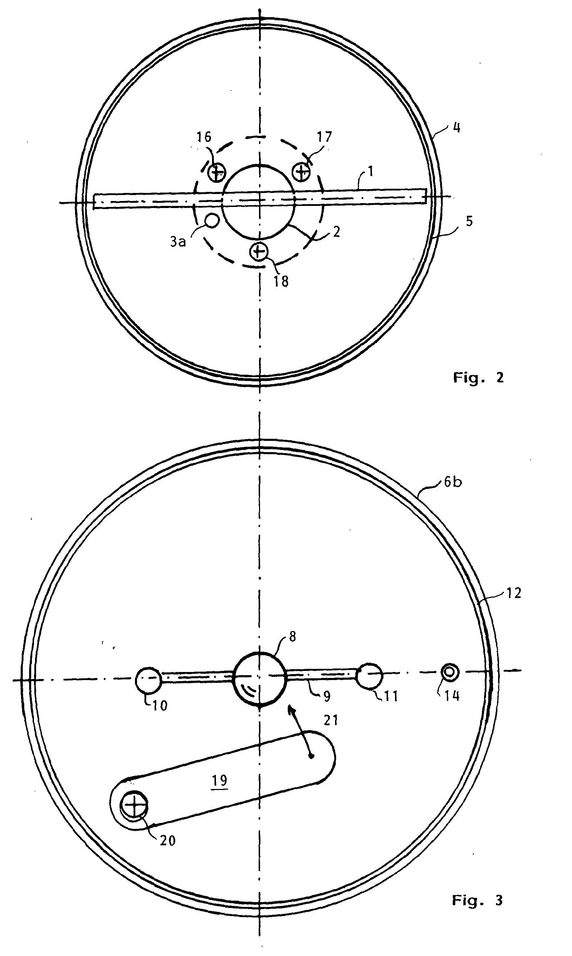

Fig. 2 zeigt den Deckel 4 von unten. Im Randbereich ist der O-Ring 5 eingesetzt. Der Mischpropeller 1 sitzt auf der Welle 2, die in dem Lagerflansch 3 drehbar angeordnet ist. Der Flansch ist mit Schrauben, 16, 17, 18 auf dem Deckel 4 befestigt. Die achsparallele Bohrung 3a durchdringt sowohl den Lagerflansch 3 als auch den Deckel 4.

Fig. 3 stellt die Bodenplatte 6b in der Ansicht von unten dar. In der Mitte erkennt man die Elastomerkugel 8, die von einem Gummiband 9 gehalten wird. Das Band wird an Schrauben 10 und 11 aufgehängt. Am äußeren Rand der Platte 6b sorgt der O-Ring 12 für eine vakuumdichte Verbindung zum Eingießbehälter 7. Der Eingießbehälter kann über das Röhrchen 14 entlüftet werden.
Weiterhin ist eine Blattfeder 19 dargestellt, die von einer Schraube 20 gehalten wird und in Richtung des Pfeiles 21 geschwenkt werden kann, um die Elastomerkugel 8 gegen die Öffnung 6c zu pressen.

Die beschriebene Vorrichtung wird wie folgt gehandhabt:

Man schwenkt die Blattfeder 19 über die Kugel 8 und schließt das Ventil 13. Dann gibt man eine bestimmte Menge Wasser und Einbettmasse in den Anrührbecher 6, setzt den Deckel 4 auf und drückt die Welle 2 in die Kupplungsbuchse der Antriebseinheit. Dabei wird auch die Bohrung 3a an die Vakuumpumpe angeschlossen. Der Anrührbecher 6 wird angesaugt und vom Vakuum gehalten. Da auch die Kugel 8 vom Vakuum gehalten wird, kann die Blattfeder 19 zur Seite geschwenkt werden.
Man kann jetzt - nach Ablauf des Rühr- und Entlüftungsprogramms - den Eingießbehälter 7 mit dem aufgebauten Modell mit einer Hand gegen die Bodenplatte 6b drücken und mit der anderen Hand den Hahn 13 öffnen. Dadurch wird schlagartig der Eingießbehälter 7 angesaugt. Beim Druckausgleich in beiden Behältern bewegt sich die Elastomerkugel 8 um einige Millimeter in die Öffnungsposition, so dass die zähflüssige Einbettmasse um die Kugel herum austreten und das Wachsmodell umhüllen kann.
Nach dem Ausfließen der Einbettmasse wird die Vakuumpumpe abgestellt.
Mit dem Wiederanstieg des Luftdruckes wird die Masse zusätzlich verdichtet und eng an das Modell angepresst. Man erhält somit einen absolut blasenfreien und exakten Formkörper.

Die Erfindung ist nicht auf die dargestellte Ausführungsform beschränkt. So könnte das dargestellte "Kugelventil" durch andere Bauformen ersetzt werden, wobei aber hervorzuheben ist, dass die dargestellte Bauform besonders zuverlässig und leicht zu reinigen ist. Auch könnte der Absperrhahn durch ein Magnetventil ersetzt werden, das von der Antriebseinheit aus zu steuern wäre.

### Gewerbliche Verwertbarkeit

Die beschriebene Vorrichtung zur Herstellung von Gießformen unter Vakuum kann leicht mit einfachen Spritzgusswerkzeugen unter Verwendung bekannter Rühreinrichtungen und Vakuumerzeuger aufgebaut werden. Sie ist hervorragend geeignet für die Dentaltechnik und andere Hersteller von hochwertigen Gussmodellen.

### Bezugszeichenliste

- 1: Mischpropeller
- 2: Welle
- 2a: Kupplungsnut
- 3: Lagerflansch
- 3a: Bohrung
- 4: Deckel
- 4a: Nut
- 5: O-Ring
- 6: Anrührbecher
- 6a: Dichtungsflansch
- 6b: Bodenplatte
- 6c: konische Bohrung
- 7: Eingießbehälter
- 8: Elastomerkugel
- 9: Gummiband
- 10, 11: Schrauben
- 12: O-Ring
- 13: Absperrhahn
- 14, 15: Röhrchen
- 16, 17, 18: Schrauben
- 19: Blattfeder
- 20: Schraube
- 21: Pfeil

## Patentansprüche

1. Vorrichtung zur Herstellung von Gießformen unter Vakuum mit einem topfartigen Anrührbecher, dessen Deckel einen Lagerflansch und eine Welle mit einem Mischpropeller trägt, wobei die Welle an einen Rührmotor ankuppelbar ist und der Flansch eine Bohrung aufweist, die zu einer Vakuumpumpe führt,
**dadurch gekennzeichnet,**
**dass** die Bodenplatte (6b) des Anrührbechers (6) ein Ausströmventil (6c, 8) aufweist,
**dass** diese Bodenplatte zugleich als Deckel für einen topfförmigen Eingießbehälter (7) ausgebildet ist und
**dass** an diese Bodenplatte ein Absperrhahn (13) angeschlossen ist, dessen oberes Anschlussröhrchen (15) in den materialfreien Teil des Anrührbechers (6) mündet.

2. Vorrichtung nach Anspruch 1, **dadurch gekennzeichnet,**
**dass** das Ausströmventil (6c, 8) als dichtendes Element eine Elastomerkugel (8) aufweist, die unter der Durchlassöffnung (6c) federnd aufgehängt ist und
**dass** die Kugel durch eine schwenkbare Blattfeder (19) oder Lasche gegen die Durchlassöffnung (6c) pressbar ist.

3. Vorrichtung nach Anspruch 1, **dadurch gekennzeichnet,**
**dass** der Eingießbehälter (7) einen größeren Durchmesser aufweist als der Anrührbecher (6), so dass eine ringförmige Fläche für den Anschluss des Absperrhahnes (13) zur Verfügung steht.
